# EUROPEAN PATENT APPLICATION

(11) **EP 3 404 543 A1**
(43) Date of publication of application: **21.11.2018**
(21) Application number: 18172560.7
(22) Date of filing: 16.05.2018
(51) Int. Cl.: G06F 9/52, G06F 17/22

(54) **METHODS FOR WORKING COLLABORATIVELY AND SYSTEMS USING THE SAME**

(30) Priority: 16.05.2017 CN 201710341859
(71) Applicant: Synology Incorporated, Taipei 103 (TW)
(72) Inventor: Chang, Shu-Ming, Taipei 103 (TW)
(74) Representative: Michalski Hüttermann & Partner Patentanwälte mbB

(57) **Abstract**

The invention introduces a method for working collaboratively, performed by a processing unit when loading and executing program code of a client, including: receiving a signal indicating an edit made to an electronic file by a user through an MMI (Man Machine Interface); generating and executing an editing command corresponding to the signal; increasing a client revision counter by one in response to the editing; issuing a synchronization request including the editing command to a server; receiving from the server an acknowledgement including the editing command and a value of a server revision counter; and when a value of the client revision counter corresponding to the editing command does not match the value of the server revision counter, determining that a command conflict has occurred and performing a conflict-resolution procedure to synchronize an execution order of the editing commands from all clients.

## Description

### CROSS REFERENCE TO RELATED APPLICATIONS

This Application claims the benefit of China Patent Application No. 201710341859.2, filed on May 16, 2017, the entirety of which is incorporated by reference herein.

### BACKGROUND

### Technical Field

The present invention relates to CWE (Collaborative Working Environment), and in particular, to methods for working collaboratively and systems using the same.

### Description of the Related Art

A CWE (collaborative working environment) supports people, such as e-professionals, in their cooperative operations. A successful CWS (collaborative working system) is the availability of group collaboration technology or groupware - hardware and software tools that help groups to access and share information. In a CWS, a command conflict may occur when two or more users edit the same electronic file. Thus, it is desirable to have methods for collaborative working and systems using the same to solve command conflicts in the CWE.

### BRIEF SUMMARY

An embodiment of the invention introduces a method for working collaboratively, performed by a processing unit when loading and executing program code of a client, including: receiving a signal indicating an edit made to an electronic file by a user through an MMI (Man Machine Interface); generating and executing an editing command corresponding to the signal; increasing a client revision counter by one in response to the edit; issuing a synchronization request including the editing command to a server; receiving an acknowledgement including the editing command and a value of a server revision counter from the server; and when a value of the client revision counter corresponding to the editing command does not match the value of the server revision counter, determining that a command conflict has occurred and performing a conflict-resolution procedure to synchronize an execution order of the editing commands from all clients.

An embodiment of the invention introduces a method for working collaboratively, performed by a processing unit when loading and executing program code of a server, including: receiving a first synchronization request including an editing command from a first client; increasing a server revision counter by one in response to the receipt of the first synchronization request; transferring a second synchronization request including the editing command and a value of the server revision counter to a second client; and replying with an acknowledgement including the editing command and the value of the server revision counter to the first client.

An embodiment of the invention introduces a system for working collaboratively, including: a server apparatus. The server apparatus includes a memory storing a server revision counter, and a processing unit. The processing unit receives a first synchronization request including an editing command from a first client; increases the server revision counter by one in response to the receipt of the first synchronization request; transfers a second synchronization request including the editing command and a first value of the server revision counter to a second client; and replies with an acknowledgement including the editing command and the value of the server revision counter to the first client.

A detailed description is given in the following embodiments with reference to the accompanying drawings.

### BRIEF DESCRIPTION OF THE DRAWINGS

The present invention can be fully understood by reading the subsequent detailed description and examples with references made to the accompanying drawings, wherein:
FIG. 1 is the network architecture of a CWS (Collaborative Working System) according to an embodiment of the invention;
FIG. 2 is the system architecture of a NAS (Network-Attached Storage) system according to an embodiment of the invention;
FIG. 3 is the system architecture of a computer apparatus according to an embodiment of the invention;
FIG. 4 is a flowchart illustrating a method for initializing the CWS according to an embodiment of the invention;
FIGS. 5A and 5B are flowcharts illustrating a method for executing editing commands synchronized among the clients in the CWS according to an embodiment of the invention;
FIG. 6 is a message exchange diagram according to an embodiment of the invention;
FIG. 7 is a schematic diagram illustrating a spreadsheet screen according to an embodiment of the invention;
FIGS. 8A and 8B are schematic diagrams illustrating spreadsheet screens displayed for two clients according to an embodiment of the invention.

### DETAILED DESCRIPTION

The following description is of the well-contemplated mode of carrying out the invention. This description is made for the purpose of illustrating the general principles of the invention and should not be taken in a limiting sense. The scope of the invention is best determined by reference to the appended claims.

The present invention will be described with respect to particular embodiments and with reference to certain drawings, but the invention is not limited thereto and is only limited by the claims. It will be further understood that the terms "comprises," "comprising," "includes" and/or "including," when used herein, specify the presence of stated features, integers, steps, operations, elements, and/or components, but do not preclude the presence or addition of one or more other features, integers, steps, operations, elements, components, and/or groups thereof.

Use of ordinal terms such as "first", "second", "third", etc., in the claims to modify a claim element does not by itself connote any priority, precedence, or order of one claim element over another or the temporal order in which acts of a method are performed, but are used merely as labels to distinguish one claim element having a certain name from another element having the same name (but for use of the ordinal term) to distinguish the claim elements.

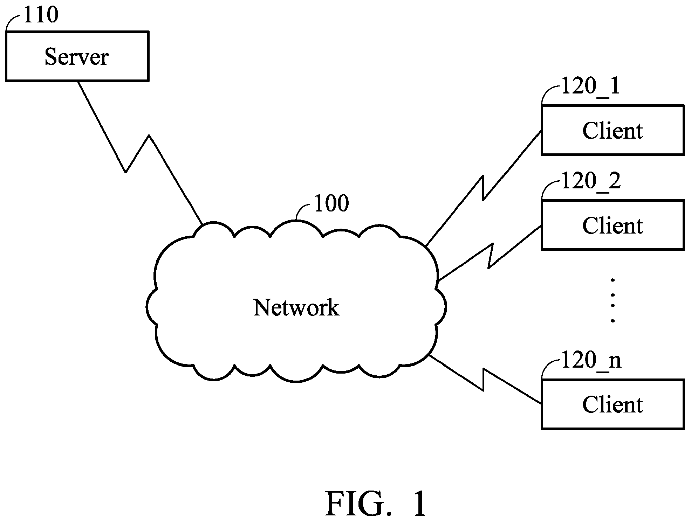

FIG. 1 is the network architecture of a CWS (Collaborative Working System) according to an embodiment of the invention. The CWS includes a server 110 and clients 120_1 to 120_*n*, where *n* is arbitrary positive integer. The server 110 can serve multiple clients, and any of the clients 120_a to 120_*n* can use services resident on multiple servers. The server 110 is a computer program that provides relevant functionality for the clients 120_1 to 120_*n* being computer programs. The server 110 may provide CWE services, such as accessing and sharing data among the clients 120_1 to 120_*n*. Specifically, the server 110 may coordinate with the clients 120_1 to 120_*n* to access the same electronic file, such as a spreadsheet, a drawing, a schedule, etc. Any of the clients 120_1 to 120_*n* may connect to the server 110 through a network 100 for accessing data of the server 110. The network 100 may be the Internet, a LAN (Local Area Network), a WLAN (Wireless Local Area Network), a wireless telephony network, or any combinations thereof. Although the embodiments have been described having the clients 120_1 to 120_*n* connecting to the server 110 through the network 110, it should be noted that the invention is equally applicable to a server and at least one client executed in the same electronic apparatus, and the invention should not be limited thereto. An apparatus running the server 110 may be referred to as a server apparatus and an apparatus running at least one of the clients 120_1 to 120_*n* may be referred to as a client apparatus.

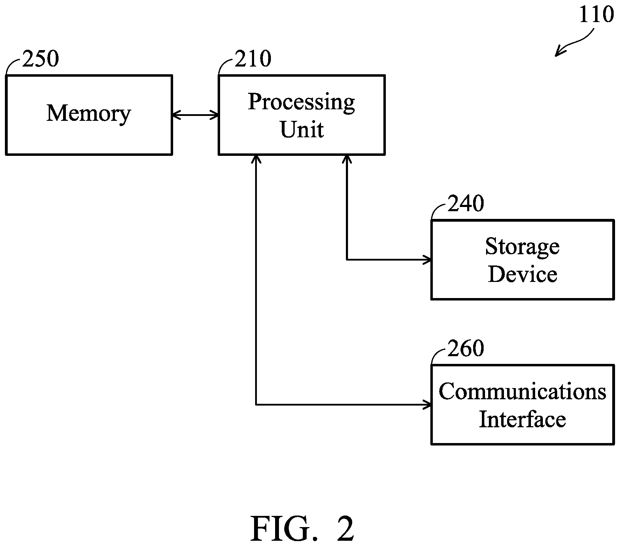

In some embodiments, a NAS (Network-Attached Storage) system may run program codes of the server 110. FIG. 2 is the system architecture of a NAS system according to an embodiment of the invention. A processing unit 210 can be implemented in numerous ways, such as with dedicated hardware, or with general-purpose hardware (e.g., a single processor, multiple processors or graphics processing units capable of parallel computations, or others) that is programmed using microcode, macrocode or software instructions to perform the functions recited herein. The system architecture further includes a memory 250 for storing necessary data in execution, such as variables, data tables, data abstracts, or others. A storage device 240 may include multiple storage units, such as a HD (Hard Disk), a SSD (Solid State Disk), a non-volatile memory, etc., and be configured as RAID (Redundant Array of Independent Disk) for storing a wide range of electronic files, such as Web pages, documents, video files, audio files, or others. A communications interface 260 is included in the system architecture and the processing unit 210 can thereby communicate with other electronic apparatuses. The communications interface 260 may be a LAN communications module, a WLAN, or any combination thereof.

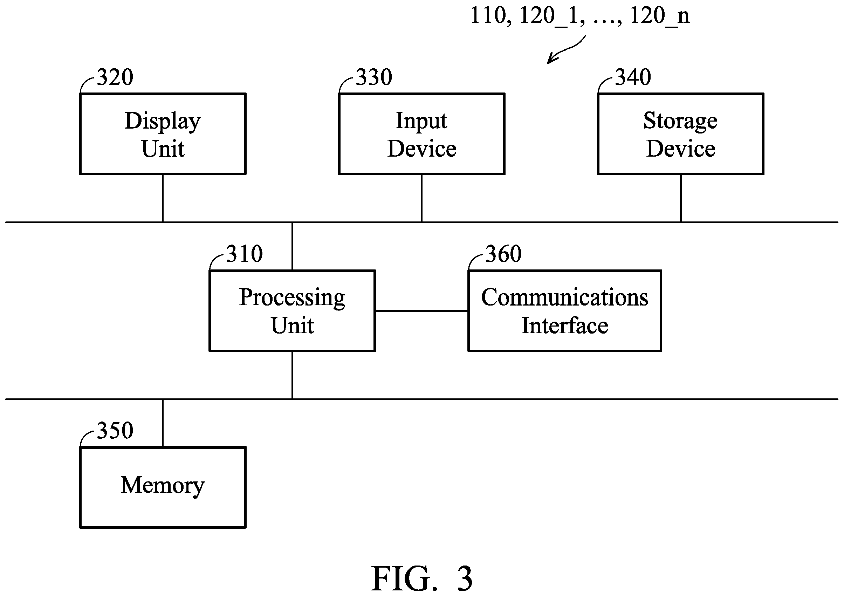

FIG. 3 is the system architecture of a computer apparatus according to an embodiment of the invention. The system architecture may be used to run program codes of any of the server 110 and the clients 120_1 to 120_*n* and be practiced in a mobile phone, a tablet computer, a personal computer, a notebook or an electronic apparatus capable of complicated computation. A processing unit 310 can be implemented in numerous ways, such as with dedicated hardware, or with general-purpose hardware (e.g., a single processor, multiple processors or graphics processing units capable of parallel computations, or others) that is programmed using microcode, macrocode or software instructions to perform the functions recited herein. The system architecture further includes a memory 350 for storing necessary data in execution, such as runtime variables, data tables, etc., and a storage device 340 for storing a wide range of electronic files, such as Web pages, electronic files, video files, audio files, or others. A communications interface 360 is included in the system architecture and the processing unit 310 can thereby communicate with other electronic apparatuses. The communications interface 360 may be a LAN communications module, a WLAN, a 2.xG, 3.xG, 4.xG, 5.xG telephony network communications module, or others. The system architecture further includes one or more input devices 330 to receive user input, such as a keyboard, a mouse, a touch panel, or others. A user may press hard keys on the keyboard to input characters, control a mouse pointer on a display by operating the mouse, or control an executed application with one or more gestures made on the touch panel. The gestures include, but are not limited to, a single-click, a double-click, a single-finger drag, and a multiple finger drag. A display unit 420, such as a TFT-LCD (Thin film transistor liquid-crystal display) panel, an OLED (Organic Light-Emitting Diode) panel, or others, may also be included to display input letters, alphanumeric characters and symbols, dragged paths, drawings, or screens provided by an application for the user to view.

In order to avoid a possible command conflict when two or more users edit the same electronic file, embodiments of the invention enables the server 110 and the clients 120_1 to 120_*n* to maintain respective revision counters and any of the clients 120_1 to 120_*n* can inspect its own revision counter with the revision counter of the server 110 to determine whether a command conflict occurs. When a command conflict occurs, the client may perform a conflict-resolution procedure to synchronize an e-document access status of the client with that of the others.

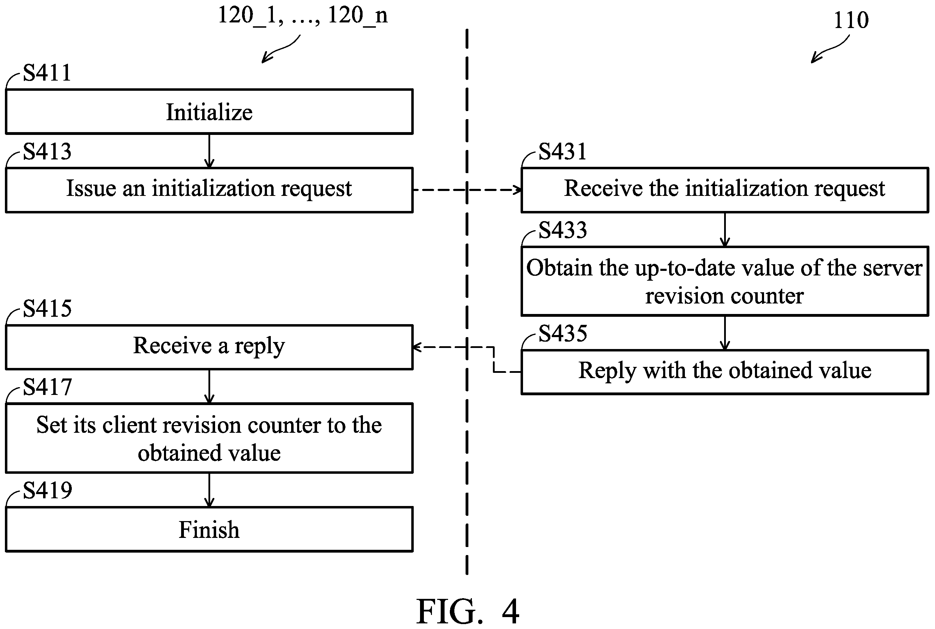

The server 110 may be run on the processing unit 210 or 310 and the clients 120_1 to 120_*n* may be run on the processing unit 310. When the server 110 is initialized, the revision counter is initiated as 0. Once an editing command is received, the server 110 increases its revision counter (referred to as a server revision counter hereinafter) by one. Any of the clients 120_1 to 120_*n* when being initialized obtains the up-to-date value of a revision counter from the server 110 and sets its revision counter (referred to as a client revision counter hereinafter) to the obtained value. FIG. 4 is a flowchart illustrating a method for initializing the CWS according to an embodiment of the invention. The method may include two parts separated by a dash line, the left hand side includes operations performed by any of the clients 120_1 to 120_*n* and the right hand side includes operations performed by the server 110. When any of the clients 120_1 to 120_*n* is initialized (step S411), an initialization request is issued to the server 110 (step S413). In some embodiments, any of the clients 120_1 to 120_*n* may issue the initialization request to the server 110 via the communications interface 360. In other embodiments, any of the clients 120_1 to 120_*n* may issue the initialization request to the server 110 via IPC (Inter-Process Communication) protocol. The initialization request at least includes identity information of a client, such as a client ID (identity), an IP (Internet Protocol) address, a MAC (Media Access Control) address, enabling the server 110 to recognize which client issues the initialization request. After receiving the initialization request (step S431), the server 110 obtains the up-to-date value of the server revision counter (step S433) and replies with the obtained value to the requesting client (step S435). The server revision counter may be maintained in the memory 250 or 350. In some embodiments, the server 110 may reply with the obtained value to the client corresponding to the identity information via the communications interface 260 or 360. In some other embodiments, the server 110 may reply with the obtained value to the client corresponding to the identity information via IPC protocol. After receiving the reply (step S415), the requesting client sets its client revision counter to the obtained value (step S417). The client revision counter may be maintained in the memory 350.

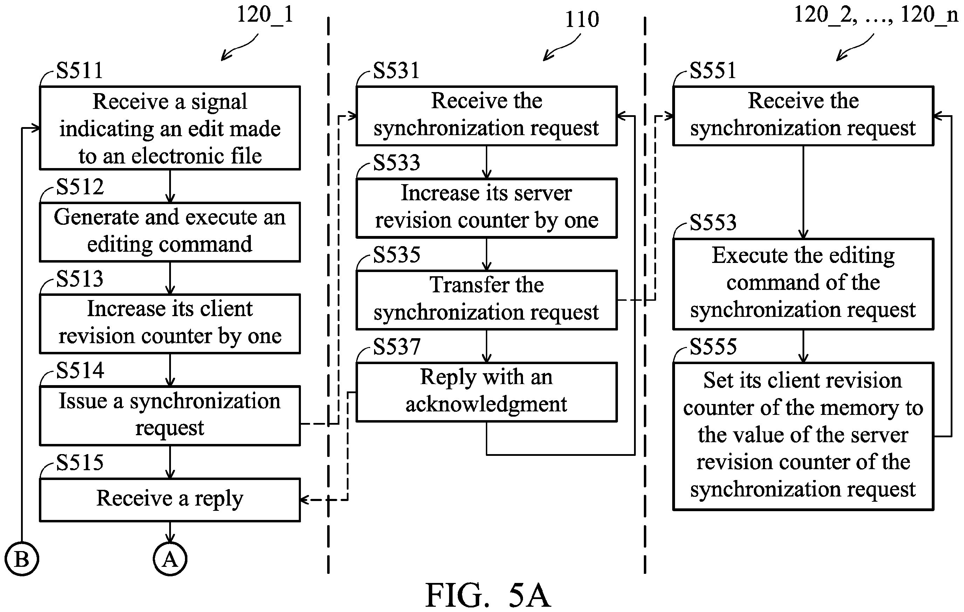

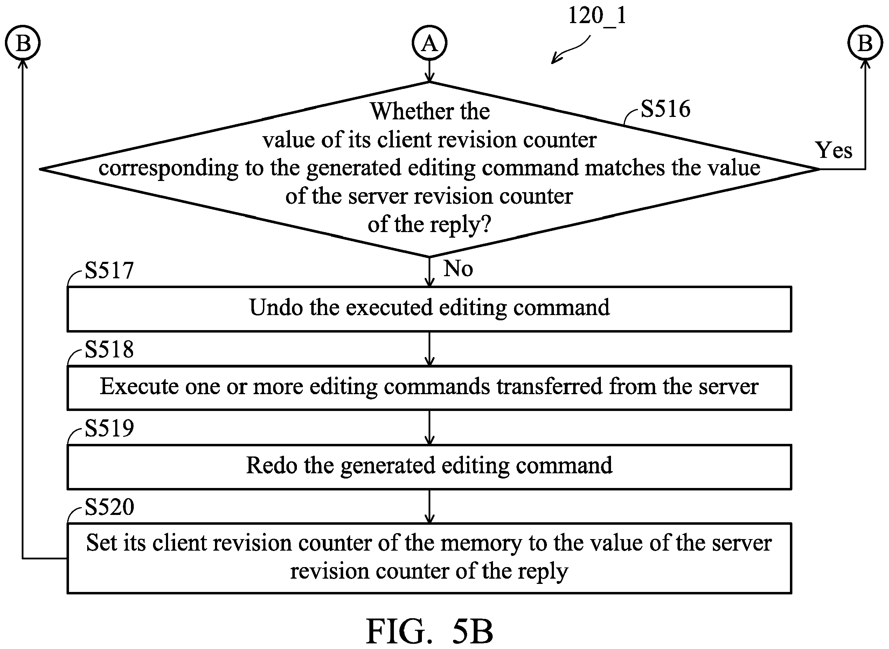

Since editing commands to the same electronic file are generated out-of-order by the clients 120_1 to 120_*n*, it needs to synchronize the execution order of the editing commands among the clients 120_1 to 120_*n* by using the server 110. FIGS. 5A and 5B are flowcharts illustrating a method for executing editing commands synchronized among the clients in the CWS according to an embodiment of the invention. The method may include three parts separated by dash lines, the left hand side includes operations performed by the processing unit executing the client 120_1, the middle includes operations performed by the processing unit executing the server 110 and the right hand side includes operations performed by the processing unit executing any of the clients 120_2 to 120_*n*.

The client 120_1 provides an MMI (Man Machine Interface) to facilitate an edit made to the electronic file by a user. The MMI includes software (such as, drivers, an operating system, etc.) and hardware (such as, a keyboard, a mouse, a touch panel, etc.) for receiving user input. After receiving a signal indicating an edit made to the electronic file by a user through the MMI (step S511), the client 120_1 generates and executes an editing command corresponding to the signal (step S512), increases its client revision counter by one (step S513) and issues a synchronization request to the server 110 (step S514). The signal indicating the editing to the electronic file may be a key press signal or a gesture signal, such as a single-click, a double-click, a single-finger drag, a multiple finger drag, etc. with two-dimensional coordinates. Specifically, the operating system with the drivers of lower layers may generate an application operating signal, for example, a single-click or double-click to a cell, a drag-and-drop of a UI (User Interface) object from coordinates A to B, an input of a letter, a symbol, an additional character or others, according to the signal indicating the editing to the electronic file. Subsequently, the client 120_1 generates an editing command, such as setting a formula of a cell of a spreadsheet, setting a value to a cell of a spreadsheet, drawing a rectangle or a triangle at a particular location, appending a record to a scheduler, removing a record from a scheduler, or others, according to the application operating signals. The editing commands generated by the client 120_1 can be interpreted and executed by each of the clients 120_*n* to 120_*n*. The synchronization request may include the identity information of the client 120_1 and the generated editing command to inform the server 110 that the editing command is generated by the client 120_1. The memory 350 may further store a mapping table to indicate that each of the editing commands generated in step S512 is related to what value of the client revision counter generated in step S513. In some embodiments recited in step S514, the synchronization request additionally includes the up-to-date value of the client revision counter. In some other embodiments recited in step S514, the synchronization request additionally includes the execution result of the editing command, thereby enabling the other clients 120_2 to 120_*n* to obtain the execution result from the synchronization request directly, instead of executing the editing command.

After receiving the synchronization request (step S531), the server 110 increases its server revision counter by one (step S533) and transfers the synchronization request to the other clients 120_2 to 120_*n*, thereby enabling the other clients 120_2 to 120_*n* to execute the editing command thereof (step S535). The transferred synchronization request may include the editing command generated by the client 120_1 and the up-to-date value of the server revision counter. In a regular situation (that is, no command conflict occurs), after receiving the synchronization request (step S551), each of the clients 120_2 to 120_*n* executes the editing command of the synchronization request (step S553) and sets its client revision counter of the memory 350 to the value of the server revision counter of the synchronization request (step S555).

After transferring the synchronization request to the other clients 120_2 to 120_n (step S535), the server 110 replies with an acknowledgment to the client 120_1 that includes the editing command and the up-to-date value of the server revision counter generated by the client 120_1, thereby enabling the client 120_1 to inspect whether a command conflict has occurred accordingly (step S537). It should be understood that, although the revision counters have been synchronized between the client 120_1 and the server 110 before step S511, the server 110 may receive an editing command from at least one of the other clients 120_2 to 120_*n* between moments at which step S511 is performed but step S531 has not been performed, resulting that the up-to-date value of the server revision counter generated in step S533 is greater than the up-to-date value of the client revision counter generated in step S513. In other words, when detecting that the replied up-to-date value of the server revision counter is greater than the value of the client revision counter corresponding to the last editing command generated in step S513, the client 120_1 determines that a command conflict has occurred. When detecting that the replied up-to-date value of the server revision counter is equal to the value of the client revision counter corresponding to the last editing command generated in step S513, the client 120_1 determines that no command conflict has occurred.

After receiving a reply (step S515), the client 120_1 determines whether the value of its client revision counter corresponding to the generated editing command matches the value of the server revision counter of the reply (step S516). It should be noted that the value of its client revision counter corresponding to the generated editing command may not up-to-date. That is, in some situations, one or more other editing commands may be generated in the time period between steps of S513 and S515 for one editing command. If they are matched, it means that no command conflict has occurred and the client 120_1 waits for a forthcoming signal indicating an edit made to the electronic file by a user (step S511). If they are not matched (the value of its client revision counter corresponding to the generated editing command is usually less than the value of the server revision counter of the reply), it means that a command conflict has occurred and a conflict-solving procedure (including steps S517 to S520) is performed. The client 120_1 may search the mapping table of the memory 350 to obtain the value of its client revision counter corresponding to the generated editing command. In the conflict-resolution procedure, specifically, the client 120_1 undoes the executed editing command (step S517), executes one or more editing commands transferred from the server 110 according to the values of the server revision counter sequentially (step S518), redoes the generated editing command (step S519) and sets its client revision counter of the memory 350 to the value of the server revision counter of the reply (step S520). Undoing the editing command in step S517 erases the last change done to the electronic file or reverts the electronic file to an older state. In other words, the undo will negate the last editing command done in step S512 to the electronic file. The redo in step S519 is the opposite of the undo of step S517. It should be understood that the conflict-solving procedure enables the client 120_1 to execute editing commands generated by the other clients according to the values of the server revision counter of the received synchronization requests before an execution of the editing command generated in step S512, so that the execution orders for all generated editing commands to the same electronic file are consistent among the clients 120_1 to 120_*n*. The editing commands transferred to the client 120_1 received from the server 110 between steps S511 and S515 may be pushed into a FIFO (First-In-First-Out) queue according to the values of the server revision counter of the synchronization requests and be sequentially popped out and executed in step S518.

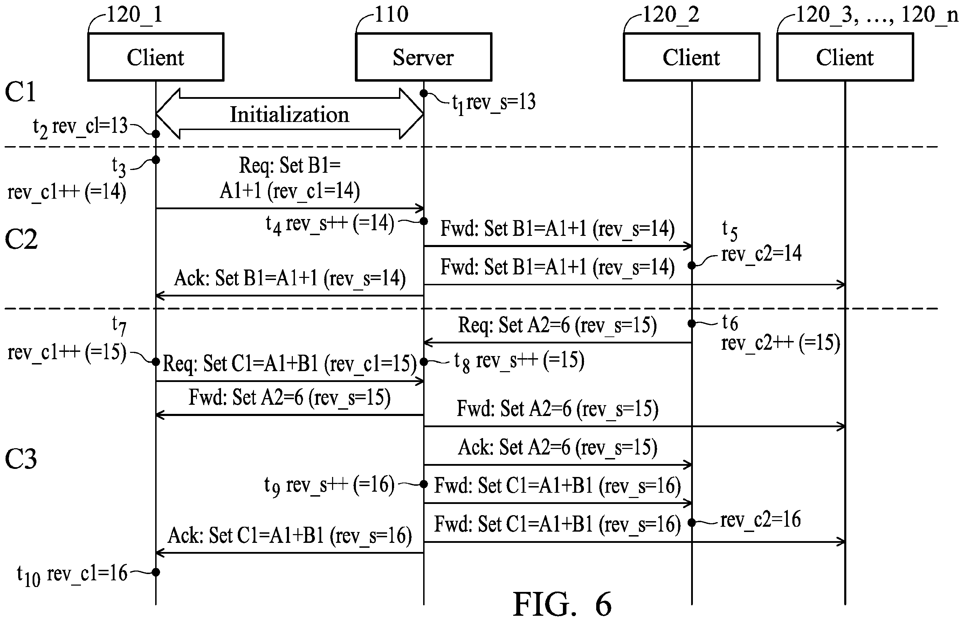

The following introduces several use cases to explain how the method synchronizes with the execution order of all editing commands among the clients 120_1 to 120_*n*. FIG. 6 is a message exchange diagram according to an embodiment of the invention.

The use case C1 describes operations when the client 120_1 is initialized: At the moment t₁, a server revision counter rev_s of the server 110 is 13. When the client 120_1 is initialized, the client 120_1 and the server 110 perform initialization operations as shown in FIG. 4. After the initialization operations are completed, at the moment t₂, a client revision counter rev_c1 of the client 120_1 is set to 13.

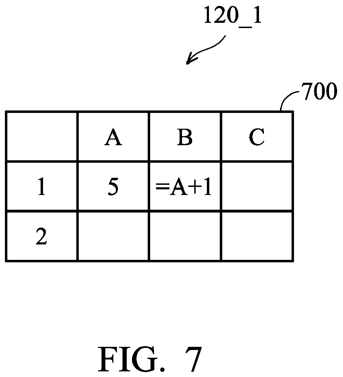

The use case C2 describes operations when a user edits a spreadsheet via an MMI of the client 120_1: FIG. 7 is a schematic diagram illustrating a spreadsheet screen according to an embodiment of the invention. The display unit 320 of the client 120_1 displays a spreadsheet 700. Refer to FIG. 5A. After the user sets a cell B1 of the spreadsheet 700 to an equation "=A1+1" via the MMI of the client 120_1 (step S511), the client 120_1 generates and executes the corresponding editing command "B1=A1+1" of the spreadsheet 700 (step S512). At the moment t₃, the client 120_1 increases the client revision counter rev_c1 by one and the client revision counter rev_c1 becomes 14 (step S513). Subsequently, the client 120_1 issues a synchronization request "Req: Set B1=A1+1 (rev_c1=14)" to the server 110, which includes the editing command "Set B1=A1+1" and the up-to-date value "14" of the client revision counter rev_c1 (step S514). After receiving the synchronization request (step S531), the server 110, at the moment t₄, increases the server revision counter rev_s by one and the server revision counter becomes 14 (step S533). Subsequently, the server 110 transfers the synchronization request "Fwd: Set B1=A1+1 (rev_s=14)" to the other clients 120_2 to 120_*n*, which includes the editing command "Set B1=A1+1" and the up-to-date value "14" of the server revision counter rev_s (step S535), and replies with an acknowledgement "Ack: Set B1=A1+1 (rev_s=14)" to the client 120_1, which includes the editing command "Set B1=A1+1" and the up-to-date value "14" of the server revision counter rev_s (step S537). After receiving the synchronization request from the server 110 (step S551), any of the clients 120_2 to 120_*n* executes the editing command of the synchronization request (step S553) and, at the moment t₅, sets its client revision counter rev_c2 to 14 (step S555). In some embodiments, the synchronization request may be "Req: Set B1=A1+1 (rev_c1=14) (res=6)" and the transferred synchronization request may be "Fwd: Set B1=A1+1 (rev_s=14) (res=6)", enabling any of the clients 120_2 to 120_*n* to obtain an execution result from the transferred synchronization request directly, instead of executing the editing command "Set B1=A1+1". After receiving an acknowledgement from the server 110 (step S515), the client 120_1 observes that the value "14" of the server revision counter rev_s of the acknowledgement matches the value "14" of its client revision counter rev_c1 corresponding to the editing command "Set B1=A1+1", and determines that no command conflict has occurred (the "Yes" path of step S516).

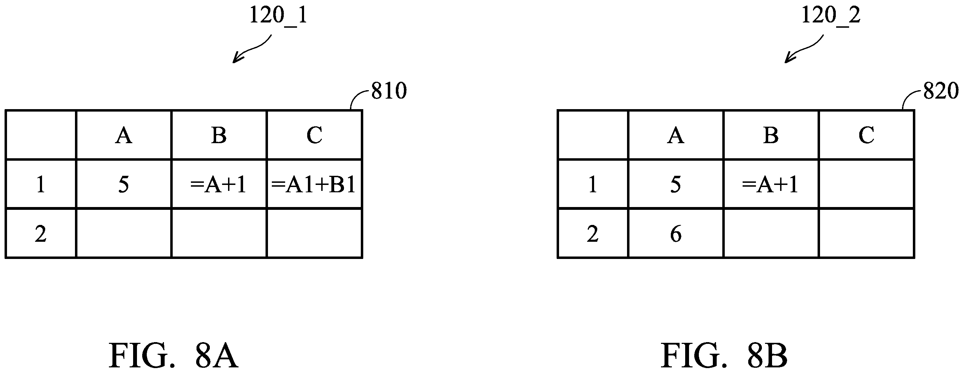

The use case C3 describes operations when two users edit two copies of the same spreadsheet via MMIs of the clients 120_1 and 120_2, respectively, and a command conflict occurs: FIGS. 8A and 8B are schematic diagrams illustrating spreadsheet screens displayed for two clients according to an embodiment of the invention. The display unit 320 of the client 120_1 displays a spreadsheet 810 and the display unit 320 of the client 120_2 displays a spreadsheet 820. After the user sets a cell A2 of the spreadsheet 820 to "6" via the MMI of the client 120_2, the client 120_2 generates and executes the corresponding editing command "A2=6" of the spreadsheet 820. At the moment t₆, the client 120_2 increases the client revision counter rev_c2 by one and the client revision counter rev_c2 becomes 15. Subsequently, the client 120_2 issues a synchronization request "Req: Set A2=6 (rev_c2=15)" to the server 110, which includes the editing command "Set A2=6" and the up-to-date value "15" of the client revision counter rev_c2. Refer to FIG. 5A. After the user sets a cell C1 of the spreadsheet 810 to "=A1+B1" via the MMI of the client 120_1 (step S511), the client 120_1 generates and executes the corresponding editing command "C1=A1+B1" (step S512). At the moment t₇, the client 120_1 increases the client revision counter rev_c1 by one and the client revision counter rev_c1 becomes 15 (step S513). Subsequently, the client 120_2 issues a synchronization request "Req: Set C1=A1+B1 (rev_c1=15)" to the server 110, which includes the editing command "Set C1=A1+B1" and the up-to-date value "15" of the client revision counter rev_c1 (step S514).

However, the server 110 receives the synchronization request "Req: Set A2=6 (rev_c2=15)" from the client 120_2 before receiving the synchronization request "Req: Set C1=A1+B1 (rev_c1=15)" from the client 120_1. After receiving the synchronization request "Req: Set A2=6 (rev_c2=15)", the server 110, at the moment tg, increases the server revision counter rev_s by one and the server revision counter becomes 15. Subsequently, the server 110 transfers the synchronization request "Fwd: Set A2=6 (rev_c2=15)" to the other clients 120_1, 120_3 to 120_*n*, which includes the editing command "Set A2=6" and the up-to-date value "15" of the server revision counter rev_s, and replies with an acknowledgement "Ack: Set A2=6 (rev_s=15)" to the client 120_2, which includes the editing command "Set Set A2=6" and the up-to-date value "15" of the server revision counter rev_s.

Since an acknowledgement corresponding to the synchronization request "Req: Set C1=A1+B1 (rev_c1=15)" has not been received, the client 120_1 stores the editing command "Set A2=6" in the memory 350 after receiving the synchronization request "Fwd: Set A2=6 (rev_s=15)".

After replying with an acknowledgement "Ack: Set A2=6 (rev_s=15)" to the client 120_2, the server 110, at the moment tg, increases the server revision counter rev_s by one and the server revision counter rev_s becomes 16 (step S533). Subsequently, the server 110 transfers the synchronization request "Fwd: Set C1=A1+B1 (rev_s=16)" to the other clients 120_2 to 120_*n*, which includes the editing command "Set C1=A1+B1" and the up-to-date value "16" of the server revision counter rev_s (step S535), and replies with an acknowledgement "Ack: Set C1=A1+B1 (rev_s=16)" to the client 120_1, which includes the editing command "Set C1=A1+B1" and the up-to-date value "16" of the server revision counter rev_s (step S537). In some embodiments, the synchronization request may be "Req: Set C1=A1+B1 (rev_c1=15) (res=11)" and the transferred synchronization request may be "Fwd: Set C1=A1+B1 (rev_s=16) (res=11)" and the two synchronization requests include an execution result "11" of the editing command "Set C1=A1+B1", enabling any of the clients 120_2 to 120_*n* to obtain the execution result from the transferred synchronization request directly, instead of executing the editing command "Set C1=A1+B1".

After receiving the acknowledgement from the server 110 (step S515), the client 120_1 observes that the value "16" of the server revision counter rev_s of the acknowledgement does not match the value "15" of its client revision counter rev_c1 corresponding to the editing command "Set C1=A1+B1", and determines that a command conflict has occurred (the "No" path of step S516). The client 120_1 undoes the executed editing command "Set C1=A1+B1" (step S517). After executing the transferred editing commands "Set A2=6" received from the server 110 (step S518), the client 120_1 redoes the generated editing command "Set C1=A1+B1" (step S519) and, at the moment t₁₀, sets its client revision counter rev_c1 to the up-to-date value "16" of the server revision counter rev_s of the acknowledgement (step S520).

Although the embodiment has been described as having specific elements in FIGS. 2 to 3, it should be noted that additional elements may be included to achieve better performance without departing from the spirit of the invention. While the process flow described in FIGS. 5A and 5B includes a number of operations that appear to occur in a specific order, it should be apparent that these processes can include more or fewer operations, which can be executed serially or in parallel (e.g., using parallel processors or a multi-threading environment).

While the invention has been described by way of example and in terms of the preferred embodiments, it is to be understood that the invention is not limited to the disclosed embodiments. On the contrary, it is intended to cover various modifications and similar arrangements (as would be apparent to those skilled in the art). Therefore, the scope of the appended claims should be accorded the broadest interpretation so as to encompass all such modifications and similar arrangements.

## Claims

1. A method for working collaboratively, performed by a processing unit when loading and executing program code of a client, comprising:
receiving a signal indicating an edit made to an electronic file by a user through an MMI (Man Machine Interface);
generating and executing a first editing command corresponding to the signal;
in response to the edit, increasing a client revision counter by one;
issuing a synchronization request to a server, wherein the synchronization request comprises the first editing command;
receiving an acknowledgement from the server, wherein the acknowledgement comprises the first editing command and a value of a server revision counter; and
when a value of the client revision counter corresponding to the first editing command does not match the value of the server revision counter, determining that a command conflict has occurred and performing a conflict-resolution procedure to synchronize an execution order of editing commands from all clients.

2. The method of claim 1, wherein the conflict-resolution procedure comprises:
undoing the first editing command;
executing a second editing command transferred from the server; redoing the first editing command; and
updating the value of the client revision counter with the value of the server revision counter.

3. The method of claim 1, wherein the synchronization request comprises an execution result of the first editing command.

4. The method of claim 1, comprising:
when the value of the client revision counter corresponding to the editing command matches the value of the server revision counter, determining that no command conflict has occurred.

5. A method for working collaboratively, performed by a processing unit when loading and executing program code of a server, comprising:
receiving a first synchronization request from a first client, wherein the first synchronization request comprises an editing command;
increasing a server revision counter by one in response to the receipt of the first synchronization request;
transferring a second synchronization request to a second client, wherein the second synchronization request comprises the editing command and a first value of the server revision counter; and
replying with an acknowledgement to the first client, wherein the acknowledgment comprises the editing command and the first value of the server revision counter.

6. The method of claim 5, comprising:
before receiving the first synchronization request, receiving an initialization request from the first client;
replying with a second value of the server revision counter to the first client, thereby enabling the first client to update a value of a client revision counter of the first client with the second value of the server revision counter.

7. The method of claim 5, wherein the first synchronization request and the second synchronization request comprise an execution result of the editing command.

8. A system for working collaboratively, comprising:
a server apparatus, comprising:
a first memory, storing a server revision counter;
a first processing unit, receiving a first synchronization request from a first client, wherein the first synchronization request comprises an editing command; increasing the server revision counter by one in response to the receipt of the first synchronization request; transferring a second synchronization request to a second client, wherein the second synchronization request comprises the editing command and a first value of the server revision counter; and replying with an acknowledgement to the first client, wherein the acknowledgment comprises the editing command and the first value of the server revision counter.

9. The system of claim 8, wherein the first processing unit receives an initialization request from the first client before receiving the first synchronization request; and replies with a second value of the server revision counter to the first client, thereby enabling the first client to update a value of a client revision counter of the first client with the second value of the server revision counter.

10. The system of claim 8, wherein the first synchronization request and the second synchronization request comprise an execution result of the editing command.

11. The system of claim 8, wherein the server apparatus comprises a first communications interface, and the first processing unit receives the first synchronization request from the first client via the first communications interface and replies with the acknowledgement to the first client via the first communications interface.

12. The system of claim 8, wherein the first processing unit receives the first synchronization request from the first client via IPC (Inter-Process Communication) protocol and replies with the acknowledgement to the first client via IPC protocol.

13. The system of claim 8, comprising:
a client apparatus, comprising:
a second memory, storing a client revision counter;
a second processing unit, receiving a signal indicating an edit made to an electronic file by a user through an MMI (Man Machine Interface); generating and executing the first editing command corresponding to the signal; increasing a client revision counter by one in response to the editing; issuing the first synchronization request to the server; receiving the acknowledgement from the server; and when a value of the client revision counter corresponding to the first editing command does not match the first value of the server revision counter, determining that a command conflict has occurred and performing a conflict-resolution procedure to synchronize an execution order of the editing commands from all clients,
wherein the second processing unit determines that no command conflict has occurred when the value of the client revision counter corresponding to the editing command matches the first value of the server revision counter.

14. The system of claim 13, wherein the conflict-resolution procedure comprises:
undoing the first editing command;
executing a second editing command transferred from the server;
redoing the first editing command; and
updating the value of the client revision counter with the first value of the server revision counter.

15. The system of claim 8, wherein the synchronization request comprises an execution result of the first editing command.
